Europäisches Patentamt

European Patent Office

Office européen des brevets

(11) Publication number: **0 405 579 A1**

# EUROPEAN PATENT APPLICATION

(21) Application number: **90112455.2**

(22) Date of filing: **29.06.90**

(51) Int. Cl.⁵: **C03C 3/078,** C03C 3/087, C03C 3/093

(30) Priority: **30.06.89 JP 168478/89**

(43) Date of publication of application:
**02.01.91 Bulletin 91/01**

(84) Designated Contracting States:
**DE DK NL**

(71) Applicant: **KIRIN BEER KABUSHIKI KAISHA**
**26-1 Jingumae 6-chome**
**Shibuya-ku Tokyo-To(JP)**

(72) Inventor: **Amano, Tsutomu**
**c/o Kirin Beer K.K., 26-1 Jingumae 6-chome**
**Shibuya-ku, Tokyo-to(JP)**
Inventor: **Yokokura, Shuichi**
**c/o Kirin Beer K.K., 26-1 Jingumae 6-chome**
**Shibuya-ku, Tokyo-to(JP)**

(74) Representative: **Reichel, Wolfgang, Dipl.-Ing.**
**et al**
**Reichel und Reichel Parkstrasse 13**
**D-6000 Frankfurt am Main 1(DE)**

(54) Glass bottles and glass compositions therefor.

㊐ Disclosed is a glass bottle formed of a glass composition comprising
45 to 70% by weight of $SiO_2$,
5 to 16% by weight of $ZrO_2$,
10 to 30% by weight of $R^1_2O$,
up to 12% by weight of $R^2O$, and
up to 5% by weight of $R^3_2O_3$
wherein $R^1$ represents an alkali metal, $R^2$ represents a divalent metal, and $R^3$ represents a trivalent metal.

EP 0 405 579 A1

Xerox Copy Centre

## GLASS BOTTLES AND GLASS COMPOSITIONS THEREFOR

### BACKGROUND OF THE INVENTION

1. Field of the Invention

The present invention relates to a glass bottle unlikely to be marred or scuffed even after repeated use and a composition to be used therefor.

2. Description of the Related Art

As containers for liquid drinks such as beer, soft drinks and milk, glass bottles have so far been used with hygiene, strength and other factors in mind.

Because of being repeatedly recycled, these glass bottles are marred on their outer surfaces by innumerable minute scuff marks.

Such scuff marks on glass bottles occur primarily due to physical damaging and chemical damaging. The physical damaging is caused by collisions and jostling among glass bottles, contacts of said bottles with various types of equipment, guides of conveyors and so on in a bottler, or collisions among glass bottles, which may occur during trucking supply bottles filled with liquid drinks to consumers and to collect empty bottles, and the chemical damaging is caused at the step of washing recycled glass bottles in a bottler, in which they are immersed in a solution of a strong alkali such as caustic soda used as a washing liquid, so that their surface layers are chemically attacked and so whitened.

The degree of damaging is relatively low when the physical damages alone are applied, but is much increased when the physical and chemical damages are alternately repeated, resulting in whitening of glass bottles.

Such severely damaged glass bottles look so poor that they have to be discarded, although they still possess sufficient strength as glass.

Therefore, surface active agents, silicone and various fatty acids are applied as scuff shielders on portions of glass bottles whitened by such scuff marks so as to reform their appearance.

However, the application of such scuff shielders is troublesome and laborious, since they have to be applied whenever glass bottles are recycled.

When scuff marks are found over the entire cylindrical portion of a glass bottle, it is required to apply the shielder over its entire surface, but it is then technically difficult to provide a complete shielding over scuff marks.

### SUMMARY OF THE INVENTION

It has now been found that the whitening phenomenon is considerably promoted primarily by reason of the above chemical damaging, and that if the chemical damaging is reduced, then the whitening phenomenon can be reduced drastically, and that the chemical damaging can be reduced by incorporating zirconium oxide in glass. On the basis of this finding, we have arrived at the present invention.

Thus, the glass bottle according to the present invention is formed of a glass composition comprising:

(a) 45 to 70% by weight of $SiO_2$;
(b) 5 to 16% by weight of $ZrO_2$;
(c) 10 to 30% by weight of $R^1_2O$;
(d) up to 12% by weight of $R^2O$; and
(e) up to 5% by weight of $R^3_2O_3$ wherein $R^1$ represents an alkali metal, $R^2$ represents a divalent metal, and $R^3$ represents a trivalent metal.

The glass composition for glass bottles according to the present invention comprises:

(a) 45 to 70% by weight of $SiO_2$;
(b) 5 to 16% by weight of $ZrO_2$;
(c) 10 to 30% by weight of $R^1_2O$;

2

(d) up to 12% by weight of $R^2O$; and

(e) up to 5% by weight of $R^3_2O_3$ wherein $R^1$ represents an alkali metal, $R^2$ represents a divalent metal, and $R^3$ represents a trivalent metal.

The glass bottles of the present invention and the glass composition used therefor are remarkably improved in respect of alkali resistance because of 5 to 16% by weight of zirconium oxide contained therein. Thus, even when dipped in a solution of a strong alkali such as caustic soda at the washing step in a bottler prior to recycling, the surfaces of the present glass bottles are so chemically stable that they are unlikely to be whitened and so can withstand well the chemical damaging.

This makes the appearance of the glass bottles attractive over an extended period of time and increase their commercial value.

Further, it is possible to increase the life (or frequency of use) of the glass bottles, since they are unlikely to be whitened.

In comparison with the use of conventional scuff shielders, the present glass bottles have additional advantages in that the application thereof can be dispensed with, resulting in labor saving, and that no shielding treatment is required whenever they are recycled.


## DESCRIPTION OF THE PREFERRED EMBODIMENT


### [I] Glass Bottles

The glass bottles of the present invention are characterized by the particular glass composition to be used therefor.

First, the glass bottles according to the present invention are designed to be repeatedly used and recycled to fill them with alcoholic liquors such as beer, whiskey and sake, seasonings such as soy sauce and vinegar, soft drinks such as coke, lemon pop and juice, milk and so on. Glass bottles most advantageously enjoying the effect of the present invention are returnable glass bottles which are filled with carbonated drinks such as beer, coke and lemon pop in which carbonic acid gas is dissolved to an internal pressure of 1.0 to 4.0 $kg/cm^2$, preferably 1.2 to 2.5 $kg/cm^2$ at room temperature, supplied to consumers and recycled after emptying.

As already mentioned, such returnable glass bottles are alternately subjected to the physical damaging caused by collisions and jostling among glass bottles, contacts of said bottles with various types of equipment, guides of conveyors and so on in a bottler, or collisions among glass bottles, which may occur during trucking to supply bottles filled with carbonated liquid drinks to consumers and to collect empty bottles, and chemical damages caused at the step of washing recycled glass bottles in a bottler, in which they are immersed in a solution of a strong alkali such as caustic soda used as a washing liquid, eventually spoiling not only their appearance but also their strength to a considerable extent.

In order to avoid this, therefore, the glass bottles of the present invention are formed of the following glass composition.


### [II] Glass Composition

The glass composition according to the present invention consists essentially of the following ingredients.

| Ingredient | % by weight |
|---|---|
| $SiO_2$ | 45-70, preferably 57-65 |
| $ZrO_2$ | 5-16, preferably 7-13 |
| $R^1_2O$ | 10-30, preferably 17-26 |
| $R^2O$ | 0-12, preferably 3-8 |
| $R^3_2O_3$ | 0-5, preferably 0-2 |

$R^1$ represents an alkali metal which may be typically Na, or K or Li. $R^2$ represents a divalent metal

3

which may be an alkaline earth metal, for example, Mg, Ca, Sr or Ba, or Zn. $R^3$ represents a trivalent metal which may be, for example, Al, Fe or B.

$SiO_2$ in the above glass composition is a major ingredient of glass. If the amount of this ingredient is smaller than 45% by weight, the chemical resistance of the intended glass will be reduced materially. If this amount exceeds 70% by weight, the softening point of the intended glass will be too high to be impractical for glass bottles.

If the amount of $ZrO_2$ is smaller than 5% by weight, the intended glass will have an insufficient effect of reducing whitening. The amount of $ZrO_2$ exceeding 16% by weight is impractical, because there is an appreciable rise in the softening point of the intended glass and the glass is likely to be devitrified due to $ZrO_2$.

When most generally available $Na_2O$ is used as $R^1_2O$, the softening point of the intended glass becomes too high with less than 10% by weight of $Na_2O$. If the amount of $Na_2O$ is larger than 30% by weight, not only will the chemical resistance of the intended glass be notably reduced, but also the material cost of glass bottles will be increased. As already mentioned, $K_2O$ or $Li_2O$ may be used in place of $Na_2O$ in a molar amount equivalent to the above amount range of $Na_2O$.

Between the amounts of $ZrO_2$ and $Na_2O$, there is interdependency determining their composition range. Thus, both ingredients are formulated within the above composition range.

When CaO is used as $R^2O$, the amount of CaO exceeding 10% by weight is undesirable, because there is a rise in the softening point of the intended glass. It is noted that since MgO, SrO, BaO, ZnO or the like may be used as $R^2O$, a part of CaO may be replaced by other alkaline earth metal oxides.

While the range of the glass composition for the glass bottles according to the present invention is as mentioned above, some amounts of $Al_2O_3$, $B_2O_3$ ($R^3_2O_3$), a sulfate such as mirabilite ($Na_2SO_4$), a fluorine compound and so on may be added to improve glass-melting and handling conditions.

For coloration, various transition element-containing colorants used for ordinary soda-lime glass such as $MnO_2$, $Fe_2O_3$, $K_2Cr_2O_7$ and NiO may be added. For amber coloration, carbon and sulfur or carbon and a sulfate may also be used.

Typical or preferable glass compositions of the present invention are composed mainly of soda-lime glass or borosilicate·glass, more preferably soda-lime glass, and further contain $ZrO_2$.

[III] Preparation of Glass Bottles

For the preparation of the glass bottles according to the present invention, kilns, bottle making machines and a series of other machinery and equipment heretofore used for glass bottle making may be applied under conditions substantially similar to those heretofore used to prepare glass compositions, provided that the composition of glass is within the above ranges and except for modifications to manufacturing conditions which may be made because of the incorporation of $ZrO_2$.

More illustratively, the present invention will now be explained with reference to the following examples.

Example 1

A starting glass composition was prepared by mixing silica sand for $SiO_2$, zircon sand for $ZrO_2$, soda lime ($Na_2CO_3$) for $Na_2O$ and lime ($CaCO_3$) for CaO, and melting them at a temperature of 1450°C for 24 hours. Thereafter, the melt was blown into a glass bottle, which was then slowly cooled down to obtain a sample bottle.

The chemical composition of the finally obtained glass was as follows.
$SiO_2$: 57.2% by weight,
$ZrO_2$: 12.0% by weight,
$Na_2O$: 25.0% by weight,
CaO: 5.2% by weight,
$Al_2O_3$: 0.2% by weight,
$Fe_2O_3$: 0.1% by weight, and
concomitant impurities: 0.3% by weight.

Ten such sample bottles were passed through the bottling step in a bottler 30 times repeatedly to undergo alternate physical damaging and chemical damaging by alkali washing.

The results are set forth in Table 1.

4

Example 2

Preparation of glass was carried out with the same starting materials under the same melting conditions as described in Example 1. The chemical composition of the finally obtained glass was as follows.
$SiO_2$: 64.7% by weight,
$ZrO_2$: 6.0% by weight,
$Na_2O$: 21.0% by weight,
CaO: 7.7% by weight,
$Al_2O_3$: 0.2% by weight,
$Fe_2O_3$: 0.1% by weight, and
concomitant impurities: 0.3% by weight.

In similar manners as described in Example 1, glass bottles were obtained and then estimated for the damage.

The results are set forth in Table 1.


Control Example 1

The damage estimation of Example 1 was followed with ten bottles each having the following composition:
$SiO_2$: 70.7% by weight,
$Na_2O$: 14.4% by weight,
CaO: 9.8% by weight,
$Al_2O_3$: 2.0% by weight,
MgO: 1.4% by weight,
$K_2O$: 1.1% by weight,
$Fe_2O_3$: 0.1% by weight,
$SO_3$: 0.1% by weight, and
concomitant impurities: 0.3% by weight.

The results are set forth in Table 1.

Table 1

|            | 1   | 2   | 3   | 4   | 5   | 6   | 7   | 8   | 9   | 10  |
|------------|-----|-----|-----|-----|-----|-----|-----|-----|-----|-----|
| Ex. 1      | +1  | +1  | +1  | +1  | +1  | +1  | +1  | +1  | +1  | +1  |
| Ex. 2      | +2  | +3  | +3  | +2  | +3  | +3  | +3  | +3  | +2  | +3  |
| Cont. Ex. 1| +4  | +4  | +4  | +4  | +4  | +4  | +4  | +4  | +4  | +4  |

Indices to the damage of the samples are as follows.
0 : Intact
+1: Slightly damaged
+2: Damaged
+3: Considerably damaged
+4: Severely damaged


**Claims**

1. A glass bottle formed of a glass composition comprising:
45 to 70% by weight of $SiO_2$;
5 to 16% by weight of $ZrO_2$;
10 to 30% by weight of $R^1_2O$;
up to 12% by weight of $R^2O$; and
up to 5% by weight of $R^3_2O_3$
wherein $R^1$ represents an alkali metal, $R^2$ represents a divalent metal, and $R^3$ represents a trivalent metal.

5

2. A glass bottle as claimed in Claim 1, wherein said glass composition comprises:

57 to 65% by weight of $SiO_2$;

7 to 13% by weight of $ZrO_2$;

up to 12% by weight of $R^1_2O$;

3 to 8% by weight of $R^2O$; and

up to 2% by weight of $R^3_2O_3$.

3. A glass bottle as claimed in Claim 1, wherein

$R^1$ is Na, K or Li,

$R^2$ is Mg, Ca, Sr, Zn or Ba, and

$R^3$ is Al, Fe or B.

4. A glass composition for glass bottles comprising:

45 to 70% by weight of $SiO_2$;

5 to 16% by weight of $ZrO_2$;

10 to 30% by weight of $R^1_2O$;

up to 12% by weight of $R^2O$; and

up to 5% by weight of $R^3_2O_3$

wherein $R^1$ represents an alkali metal, $R^2$ represents a divalent metal, and $R^3$ represents a trivalent metal.

5. A glass composition for glass bottles as claimed in Claim 4, which comprises:

57 to 65% by weight of $SiO_2$;

7 to 13% by weight of $ZrO_2$;

up to 12% by weight of $R^1_2O$;

3 to 8% by weight of $R^2O$; and up to 2% by weight of $R^3_2O_3$.

6. A glass composition for glass bottles as claimed in Claim 4, wherein

$R^1$ is Na, K or Li,

$R^2$ is Mg, Ca, Sr, Zn or Ba, and

$R^3$ is Al, Fe or B.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | AMERICAN CERAMIC SOCIETY BULLETIN. vol. 47, no. 8, August 1968, COLUMBUS US pages 727 - 730; T.BAAK ET AL.: "CHEMICAL DURABILITY OF A SODA-LIME GLASS WITH TIO2, GEO2, ZRO2, AND ALPO4 PARTIALLY SUBSTITUTED FOR SIO2." * abstract * * page 727, left-hand column, paragraph 1 * * page 728, left-hand column, paragraph 1 * | 1-6 | C03C3/078 C03C3/087 C03C3/093 |
| X | US-A-4065317 (BAAK) * column 11, lines 25 - 30; claim 5 * | 1-6 | |
| A | GB-A-1191162 (OWENS-ILLINOIS) * page 11, lines 16 - 22; claim 1 * | 1-6 | |
| A | GLASS AND CERAMICS. vol. 37, no. 5-6, June 1980, NEW YORK US pages 224 - 227; B.V.TARASOV: "SYNTHESIS OF GLASSES WITH HIGH CHEMICAL STABILITY." * page 224, paragraphs 1 - 2 * * table 1 * | 1-6 | TECHNICAL FIELDS SEARCHED (Int. Cl.5 )  C03C |
| A | CHEMICAL ABSTRACTS, vol. 82, no. 7, 07 April 1975 Columbus, Ohio, USA page 218; ref. no. 89527R & SU-A-441244 (STATE SCIENT.-RES.INST.OF GLASS)( 300874) * abstract * | 1-6 | |

The present search report has been drawn up for all claims

| Place of search | Date of completion of the search | Examiner |
|---|---|---|
| THE HAGUE | 03 OCTOBER 1990 | VAN BOMMEL L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)